# EUROPÄISCHE PATENTSCHRIFT

(11) **EP 3 017 961 B1**
(45) Veröffentlichungstag und Bekanntmachung des Hinweises auf die Patenterteilung: **07.10.2020**
(21) Anmeldenummer: 15162884.9
(22) Anmeldetag: 09.04.2015
(51) Int. Cl.: B60C 1/00, C08L 7/00

(54) **FAHRZEUGLUFTREIFEN**
PNEUMATIC TYRES FOR A VEHICLE
PNEUMATIQUES DE VÉHICULE

(30) Priorität: 23.06.2014 DE 102014211944
(43) Veröffentlichungstag der Anmeldung: 11.05.2016
(73) Patentinhaber: Continental Reifen Deutschland GmbH, 30165 Hannover (DE)
(72) Erfinder: Rodrigues, Pedro-Nuno, 30165 Hannover (DE); Dahlke, Markus, 31515 Wunstorf (DE)
(74) Vertreter: Finger, Karsten

(56) Entgegenhaltungen:
- WO-A1-2010/016976
- US-A1- 2002 177 650
- US-A1- 2003 036 599
- US-B2- 6 730 710
- US-B2- 6 892 774

## Beschreibung

Die Erfindung betrifft einen Fahrzeugluftreifen in Radialbauart mit einem Laufstreifen (1), einem Gürtelverband (2), Seitenwänden (6), Wulstbereichen und einer von Wulstbereich zu Wulstbereich verlaufenden, zumindest eine Lage (10, 11) aufweisenden, Karkasseinlage (5), wobei jede Lage (10, 11) zwischen und in Gummierungsschichten (15, 16), eingebettete zumindest im Wesentlichen in radialer Richtung verlaufende textile Festigkeitsträger (12) aufweist, wobei die innere Gummierungsschicht (16) aus einer Naturkautschuk und/oder synthetisches Polyisopren enthaltenden Kautschukmischung hergestellt ist,dadurch gekennzeichnet,dass die Karkasseinlage (5) den Reifeninnenraum unmittelbar begrenzt,wobei bei einer Karkasseinlage (5) mit einer einzigen Lage die unmittelbar an den Reifeninnenraum anschließende Gummierungsschicht (16) dieser Lage aus einer Blähgraphit enthaltenden Kautschukmischung hergestellt ist undwobei bei einer Karkasseinlage (5) mit mehr als einer Lage (10, 11) die unmittelbar an den Reifeninnenraum anschließende Gummierungsschicht (16) der innersten Lage (11) aus einer Blähgraphit enthaltenden Kautschukmischung hergestellt ist, und wobei die den Reifeninnenraum unmittelbar begrenzende Lage (11) der Karkasseinlage (5) eine Dicke von 0,5 mm bis 2,0 mm aufweist.

Bei Fahrzeugluftreifen wird die Gasdichtheit durch die luftdichte Innenschicht sichergestellt. Die Kautschukmischungen zur Herstellung der Innenschicht enthalten meist einen großen Anteil an Butyl- und/oder Halobutylkautschuk, welche grundsätzlich teuer sind. Zum Schutz der Innenschicht wird häufig über einen eigenen Prozessschritt eine ein- oder mehrlagige Squeegeeinlage zwischen der Karkasseinlage und der Innenschicht angebracht. Sowohl Squeegeeinlage als auch Innenschicht erhöhen das Gewicht des fertigen Reifens und wirken sich somit ungünstig auf den Kraftstoffverbrauch aus.

Darüber hinaus ist es bereits bekannt, Blähgraphit in Gummibauteilen von Fahrzeugluftreifen zu verwenden. Beispielsweise ist aus der DE 60 2006 000 285 T2 ein Fahrzeugluftreifen bekannt, dessen Elastomerbauteile, beispielsweise eine Lauffläche, eine Seitenwand, ein Kernprofil, ein Wulstschutzstreifen oder eine Innenisolierung, aus einer Kautschukmischung hergestellt sind, welche mit einem Elastomer interkaliertes Blähgraphit enthält.

Der in der US 2011 030 868 4 A1 offenbarte Fahrzeugluftreifen weist Gürtelkantenpolster auf, welche aus einer Kautschukmischung aufgebaut sind, die Graphit, beispielsweise in Form von Blähgraphit, enthält. Die Gürtelkantenpolster sollen die Gürtelhaltbarkeit verbessern.

Aus der WO 2010/016976 A1 ist eine Kautschukmischung bekannt, welche als Füllstoff Blähgraphit und zumindest einen weiteren Füllstoff enthält. Diese Kautschukmischung ist beispielsweise zur Herstellung einer Innenschicht eines Fahrzeugluftreifens vorgesehen.

Die US 6 892 774 B2 offenbart einen Fahrzeugluftreifen mit einem aus einer Blähgraphit enthaltenden Kautschukmischung gefertigten Laufstreifen, welcher gute Traktionseigenschaften auf eisbedeckten Fahrbahnen sicherstellen soll. Auch aus der US 2003/0036599 A1, der US 2002/0177650 A1 und der US 6 730 710 B2 sind Fahrzeugluftreifen bekannt, die zur Verbesserung der Griffeigenschaften auf Eis einen Laufstreifen aufweisen, welcher aus einer Blähgraphit enthaltenden Kautschukmischung hergestellt ist.

Der Erfindung liegt die Aufgabe zu Grunde, die Luftdichtheit eines Reifens sicherzustellen, wobei auf eine herkömmliche Innenschicht verzichtet werden soll.

Die gestellte Aufgabe wird erfindungsgemäß dadurch gelöst, dass die Karkasseinlage den Reifeninnenraum unmittelbar begrenzt, wobei bei einer Karkasseinlage mit einer einzigen Lage die unmittelbar an den Reifeninnenraum anschließende Gummierungsschicht dieser Lage aus einer Blähgraphit enthaltenden Kautschukmischung hergestellt ist und wobei bei einer Karkasseinlage mit mehr als einer Lage die unmittelbar an den Reifeninnenraum anschließende Gummierungsschicht der innersten Lage aus einer Blähgraphit enthaltenden Kautschukmischung hergestellt ist, und wobei die den Reifeninnenraum unmittelbar begrenzende Lage der Karkasseinlage eine Dicke von 0,5 mm bis 2,0 mm aufweist.

Das in der Kautschukmischung der Gummierungsschicht der Karkasseinlage eingesetzte Blähgraphit expandiert bei der Vulkanisation des Reifens, wodurch die interkalierten Verbindungen des Blähgraphits freigesetzt werden und Graphen-Schichten als feste Rückstände entstehen. Durch diese Strukturen kann die Luftdichtheit des Reifens gewährleistet werden, sodass auf eine separate luftdichte Innenschicht verzichtet werden kann. Damit kann auch auf Squeegeeinlagen, welche zum Schutz der Innenschicht vor den in den Karkasseinlagen verlaufenden Korden dienen, verzichtet werden, wodurch das Gewicht und der Rollwiderstand des Reifens verringert werden. Außerdem können durch die Erfindung Prozessschritte bei der Reifenfertigung eingespart und damit die Produktionskosten gesenkt werden.

Bei einer bevorzugten Ausführungsform der Erfindung enthält die Kautschukmischung 1 phr bis 30 phr, insbesondere 3 phr bis 25 phr, und besonders bevorzugt 5 phr bis 20 phr Blähgraphit, sodass die elastischen Eigenschaften der Gummierungsschichten optimal eingestellt werden und eine Karkasseinlage mit einer besonders geringen Luftdurchlässigkeit und besonders langer Haltbarkeit zur Verfügung gestellt werden kann.

Für den Einsatz einer erfindungsgemäßen Karkasseinlage in Nutzfahrzeugreifen ist es von Vorteil, wenn die Kautschukmischung eine Kieselsäure in einer Menge von 5 phr bis 20 phr, insbesondere in einer Menge bis zu 10 phr, enthält. Die Kieselsäure nimmt Einfluss auf die Bildung von Sulfidschichten während des Vulkanisationsprozesses, welche für eine Haftung zwischen den Festigkeitsträgern und dem aus der Kautschukmischung entstehendem Gummi essenziell sind. Dadurch kann eine dauerhaltbare und besonders belastungsfähige Karkasseinlage für Nutzfahrzeugreifen zur Verfügung gestellt werden.

Die Kautschukmischung der Gummierungsschicht enthält Naturkautschuk und/oder synthetisches Polyisopren, wobei Mischungen für Gummierungsschichten von in Nutzfahrzeugreifen eingesetzten Karkasseinlagen bis zu 100 phr Naturkautschuk und/oder synthetisches Polyisopren enthalten. Durch einen hohen Gehalt an Naturkautschuk kann die Haftung weiter verbessert werden.

Bei Nutzfahrzeugluftreifen enthält die Kautschukmischung der Gummierungsschicht bis zu 100 phr Naturkautschuk und/oder synthetisches Polyisopren.

Bei PKW-Reifen enthält die Kautschukmischung der Gummierungsschicht 40 phr bis 60 phr, insbesondere 45 phr bis 55 phr, Naturkautschuk und/oder synthetisches Polyisopren sowie Butadienkautschuk und/oder Styrolbutadienkautschuk. Die synthetischen Kautschuke sind wesentlich kostengünstiger und liefern in Kombination mit Naturkautschuk für in PKW-Reifen eingesetzte Karkasseinlagen eine ausreichend gute Haftung zwischen dem Gummi und den Festigkeitsträgern.

Durch den Zusatz von Resorcin und eines Formaldehydspenders in Mengen von 3 phr bis 7 phr können die Hafteigenschaften der aus der Kautschukmischung hergestellten Vulkanisate positiv beeinflusst werden. Diese Stoffe bewirken im Verlauf der Vulkanisation der Kautschukmischung die Bildung eines Resorcin-Formaldehyd-Harzes, welches die Haftung des entstehenden Vulkanisates an Textil- und Stahlkord maßgeblich verbessert.

Die den Reifeninnenraum unmittelbar begrenzende Lage der Karkasseinlage weist vorzugsweise eine Dicke von 0,7 mm bis 1,0 mm, auf. Derart ausgeführte Lagen erweisen sich als besonders resistent gegenüber den im Betrieb auftretenden Scherkräften.

Bei einer besonders bevorzugten Ausführungsform der Erfindung sind die Kautschukmischungen beider Gummierungsschichten der Lagen der Karkasseinlage identisch, wodurch die Fertigung der Karkasseinlage erleichtert wird.

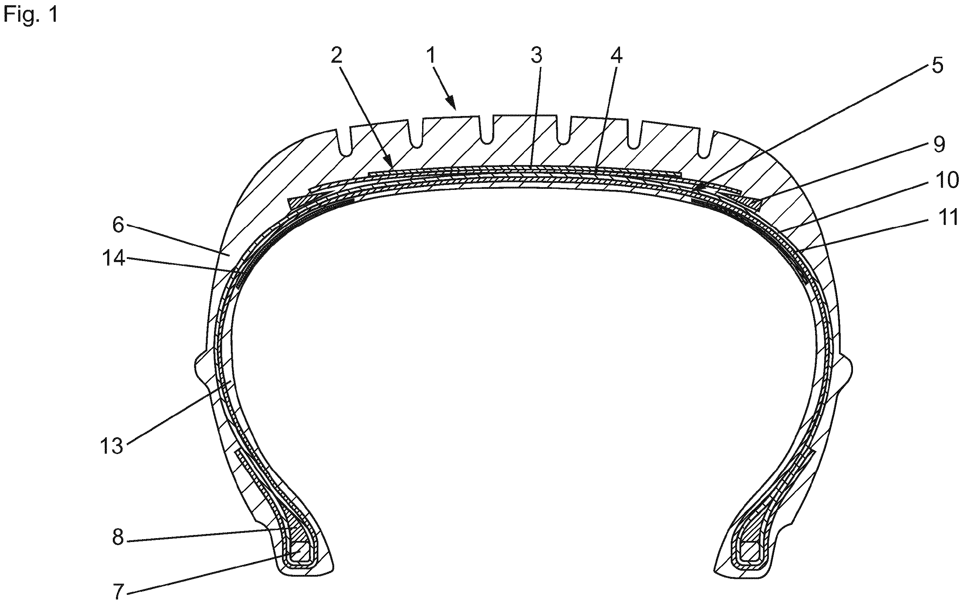

In der nachfolgenden Beschreibung sowie in den Tabellen erfolgen die Mengenangaben in der in der Kautschuktechnologie üblichen Einheit phr (parts per hundred rubber). Die Mengenangaben beziehen sich dabei jeweils auf die Massenteile des Grundpolymers bzw. bei Polymerblends auf jene der Grundpolymere. Der Stand der Technik sowie weitere Merkmale, Vorteile und Einzelheiten der Erfindung werden nun anhand der Figuren 1 bis 3 näher erläutert.

Dabei zeigen
- Fig. 1: einen Querschnitt durch einen Fahrzeugluftreifen gemäß dem Stand der Technik,
- Fig. 2: einen Querschnitt durch einen Fahrzeugluftreifen gemäß der Erfindung und
- Fig. 3: einen Querschnitt durch eine Lage einer erfindungsmäßigen Karkasseinlage.

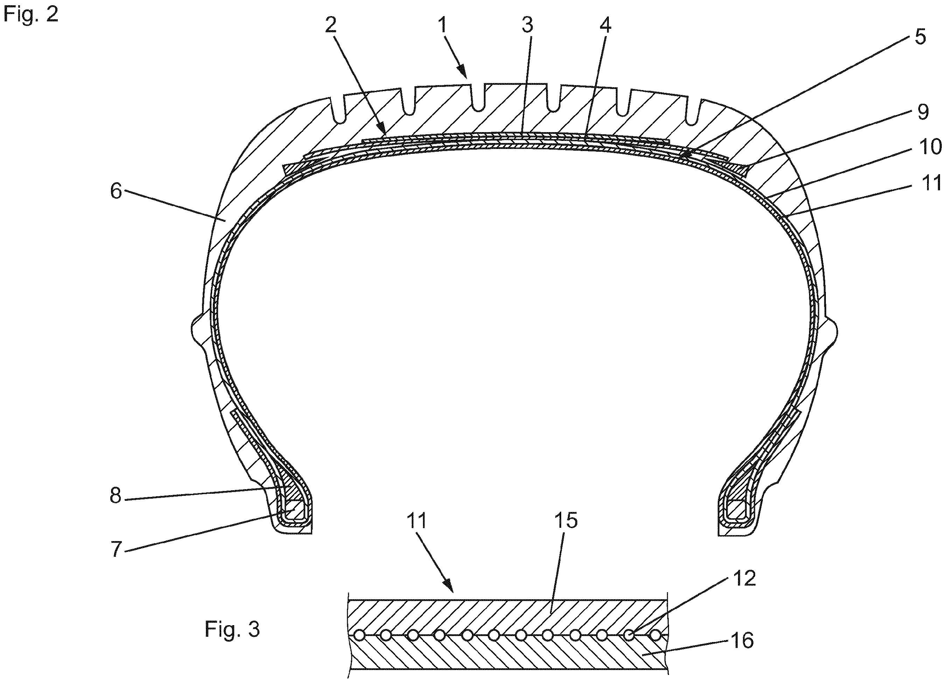

In Fig. 1 und Fig. 2 ist beispielhaft ein Reifen für Personenkraftwagen dargestellt. Die Erfindung ist jedoch auf alle Arten von Fahrzeugluftreifen anwendbar, insbesondere auch auf Nutzfahrzeugreifen.

In Fig. 1 und Fig. 2 sind von den wesentlichen Bauteilen eines für Personenkraftwagen vorgesehenen Fahrzeugluftreifens in radialer Bauart ein Laufstreifen 1, ein Gürtelverband 2 bestehend aus mehreren, insbesondere aus zwei, Gürtellagen 3, 4, eine Karkasseinlage 5, Seitenwände 6 sowie Wulstkerne 7 mit auf ihnen sitzenden Kernprofilen 8 dargestellt. In den Schulterbereichen sind zwischen dem Gürtelverband 2 und der Karkasseinlage 5 zwei Gürtelkantenpolster 9 angeordnet.

Die beiden Gürtellagen 3, 4 sind insbesondere in bekannter Weise aufgebaut und bestehen jeweils aus in Gummi eingebetteten Festigkeitsträgern, insbesondere aus Stahlkorden, wobei in jeder Gürtellage 3, 4 die Festigkeitsträger parallel zueinander und unter einem spitzen Winkel von insbesondere 12° bis 45° zur Umfangsrichtung des Reifens verlaufen, wobei die Festigkeitsträger in der einen Gürtellage 3, 4 die Festigkeitsträger in der anderen Gürtellage 3, 4 kreuzen. Der Gürtelverband 2 kann ferner eine nicht dargestellte ein- oder mehrlagig ausgeführte Gürtelbandage mit zumindest im Wesentlichen in Umfangsrichtung verlaufenden Festigkeitsträgern aus einem textilen Material, beispielsweise aus Nylon, aufweisen.

Die Karkasseinlage 5 ist ein- oder mehrlagig ausgeführt, wobei in Fig. 1 und Fig. 2 eine zweilagige Ausführung dargestellt ist. Die dargestellte zweilagige Karkasseinlage 5 setzt sich aus einer äußeren Lage 10 und einer - dem Reifeninnenraum näher befindlichen - inneren Lage 11 zusammen. Die Lagen 10, 11 der Karkasseinlage 5 bestehen aus in Gummi eingebetteten textilen Festigkeitsträgern 12, wobei die textilen Festigkeitsträger 12 in Fig. 1 und Fig. 2 nicht dargestellt sind. Die textilen Festigkeitsträger 12 bestehen beispielsweise aus Polyester oder Polyamid und verlaufen in den Lagen 10, 11 der Karkasseinlage 5 zumindest im Wesentlichen in radialer Richtung, daher im rechten Winkel zur Umfangsrichtung des Reifens.

Die beiden Lagen 10, 11 der Karkasseinlage 5 verlaufen aneinander liegend entlang des Gürtelverbandes 2 über die Seitenwände 6 zu den Wulstbereichen und sind dort um die Wulstkerne 7 Karkasshochschläge bildend umgeschlagen, wobei bei den dargestellten Ausführungsformen die Karkasshochschläge der beiden Lagen 10, 11 in gleicher Höhe enden.

Der Fahrzeugluftreifen gemäß Fig. 1 weist radial innerhalb der zweilagigen Karkasseinlage 5 eine luftdichte Innenschicht 13 auf. Die Innenschicht 13 ist für die Gasdichtheit des Reifens verantwortlich und ist aus einer speziellen Kautschukmischung hergestellt. Als Kautschukkomponente kommen für diese Kautschukmischung ausschließlich oder überwiegend Butylkautschuk oder Halobutylkautschuk zum Einsatz, wobei auch ein Kautschukblend aus Butylkautschuk bzw. Halobutylkautschuk mit Naturkautschuk und/oder Styrolbutadienkautschuk verwendet werden kann.

Radial innerhalb der Karkasseinlage 5 befindet sich eine aus einer Kautschukmischung hergestellte Squeegeeinlage 14. Bei PKW-Reifen befindet sich diese ausschließlich in den Schulterbereichen. Bei Nutzfahrzeugreifen erstreckt sich üblicherweise eine ein- oder mehrlagig ausgeführte Squeegeeinlage 14 über die komplette Innenseite der Karkasseinlage 5.

Der Querschnitt durch einen erfindungsmäßigen Fahrzeugluftreifen ist in Fig. 2 dargestellt. Der erfindungsmäßige Fahrzeugluftreifen weist weder eine Innenschicht noch eine Squeegeeinlage auf. Die innere Lage 11 der Karkasseinlage 5 bildet die an den luftgefüllten Innenraum unmittelbar anschließende Lage und ist gemäß der Erfindung ausgeführt.

Fig. 3 zeigt einen Querschnitt durch einen Abschnitt einer gemäß der Erfindung ausgeführten Lage 11 einer Karkasseinlage 5. Liegt eine einlagige Karkasseinlage 5 vor, ist folglich deren einzige Lage gemäß der Erfindung ausgeführt. Die innere Lage 11 besteht aus einer radial äußeren Gummierungsschicht 15 und einer mit der Gummierungsschicht 15 verbundenen radial inneren Gummierungsschicht 16 sowie den textilen Festigkeitsträgern 12. Die textilen Festigkeitsträger 12 verlaufen parallel zueinander und zwischen den Gummierungs schichten 15, 16. Die innere Lage 11 weist eine Dicke von 0,5 mm bis 2,0 mm, insbesondere von 0,7 mm bis 1,0 mm, auf. Bei einer einlagigen Ausführung weist die Karkasseinlage 5 selbst diese Dicke auf.

Zumindest die der radial inneren Gummierungsschicht 16 zugrundeliegende Kautschukmischung ist gemäß der Erfindung ausgeführt und enthält Blähgraphit. Bei einer alternativen Ausführungsform der Erfindung können jedoch sowohl die Kautschukmischung der Gummierungsschicht 16 als auch die Kautschukmischung der Gummierungsschicht 15 erfindungsgemäß ausgeführt sein.

Die nachfolgend als M_{PKW} bezeichneten Mischungen werden zur Herstellung von Gummierungsschichten 16 in PKW-Reifen und die als M_{LKW} bezeichneten Mischungen werden zur Herstellung von Gummierungsschichten 16 in LKW-Reifen eingesetzt. Die Zusammensetzungen zweier exemplarischer Kautschukmischungen M_{PKW1} und M_{LKW1} gemäß der Erfindung sind in Tabelle 1 zusammengefasst. Bei M_{PKWref} und M_{LKWref} handelt es sich um Vergleichsmischungen, welche an Stelle des Blähgraphites einen Ruß enthalten.

**Tabelle 1**

| **Bestandteil** | **Einheit** | **M_{PKWref}** | **M_{PKW1}** | **M_{LKWref}** | **M_{LKW1}** |
|---|---|---|---|---|---|
| NR und/oder IR (Naturkautschuk und/oder Polyisopren) | phr | 50 | 50 | 100 | 100 |
| BR und/oder SBR (Butadienkautschuk und/oder Styrolbutadienkautschuk) | phr | 50 | 50 | 0 | 0 |
| N660 | phr | 65 | - | - | - |
| N 326 | phr | - | - | 50 | - |
| Blähgraphit | phr | - | 15 | - | 15 |
| Kieselsäure | phr | - | - | 8 | 8 |
| Weichmacher / Klebharze | phr | 30 | 30 | 30 | 30 |
| Harz (aus Resorcin und Formaldehydspender) | phr | 5 | 5 | 2,5 | 2,5 |
| Schwefel und Beschleuniger | phr | 5 | 5 | 7 | 7 |
| Zusatzstoffe ^{a} | phr | 6 | 5 | 18 | 18 |

| | | | | | |
|---|---|---|---|---|---|
| ^{a} Alterungsschutzmittel, Prozesshilfsmittel, Zinkoxid, Stearinsäure, organisches Kobaltsalz | | | | | |

Sowohl die Mischungen M_{PKW} als auch die Mischungen M_{LKW} enthalten als Füllstoff "Blähgraphit". Dieser ist den Mischungen M_{PKW} und M_{LKW} in Mengen von 1 phr bis 30 phr, insbesondere in Mengen von 3 phr bis 25 phr und besonders bevorzugt in Mengen von 5 phr bis 20 phr, hinzugefügt. Die Mischungen M_{LKW} enthalten als weiteren Füllstoff Kieselsäure, insbesondere eine Fällungskieselsäure, in einer Menge von 5 phr bis 20 phr, bevorzugt in einer Menge von bis zu maximal 10 phr.

Unter "Blähgraphit" wird im Rahmen der vorliegenden Erfindung Graphit mit einer Schichtgitterstruktur verstanden, wobei zwischen den Schichten der Schichtgitterstruktur Atome oder Moleküle, wie weiter unten noch beschrieben wird, eingelagert, auch interkaliert genannt, sind.

Graphit besitzt im Allgemeinen ein hexagonales Kristallsystem, in welchem parallel zueinander verlaufende ebene Schichten, die "Basalebenen" oder "Graphen-Schichten", vorliegen. Gemäß Römpp Online Lexikon, Version 3.36 bezeichnet man "als Graphen ... eine planare, hexagonale Anordnung von Kohlenstoff-Atomen, die in ihrer Struktur einer monomolekularen Schicht Graphit entspricht (Wabenstruktur)". Eine Graphen-Schicht besteht somit aus kovalent verknüpften sp²-hybridisierten Kohlenstoffatomen, welche in Sechsecken angeordnet sind. Im Graphit sind die einzelnen "Graphen-Schichten" untereinander über Van-der-Waals-Kräfte aneinander gebunden.

Im Idealfall befinden sich die interkalierten Verbindungen im Blähgraphit zwischen jeder Graphen-Schicht des Graphits. Im Realfall liegen jedoch im Allgemeinen zwischen einigen Graphen-Schichten keine interkalierten Verbindungen vor. Bei den interkalierten Verbindungen handelt es sich bevorzugt um wenigstens eine Stickstoff- oder Schwefelverbindung, vorzugsweise SO₂ und/oder H₂SO₄ bzw. Derivate dieser Verbindungen.

Wird Blähgraphit erwärmt, expandiert dieses räumlich, wodurch die interkalierten Verbindungen freigesetzt werden und Graphen-Schichten als feste Rückstände entstehen. Im Idealfall kommt es hauptsächlich zum Auftreten solcher Graphen-Schichten, wobei es aber auch denkbar ist, dass feste Rückstände aus Graphit, d.h. untereinander verbundene Graphen-Schichten entstehen, sodass Graphit und Graphen in Form eines Gemisches vorliegen können. Die aus dem Blähgraphit freigesetzten Verbindungen verdampfen überwiegend und werden auch als Blähgas bezeichnet.

Erfindungsgemäße Mischungen M_{PKW} enthalten ferner Naturkautschuk und/oder synthetisches Polyisopren sowie zumindest einen weiteren synthetischen Kautschuk. Als weitere synthetische Kautschuke kommen beispielsweise Butadienkautschuke oder Styrolbutadienkautschuke zum Einsatz, welche in den Mischungen M_{PKW} einzeln oder auch in Kombination eingesetzt werden können. Naturkautschuk und synthetisches Polyisopren sind in den Mischungen M_{PKW} in einer Menge von 40 phr bis 60 phr, vorzugsweise in einer Menge von 45 phr bis 55 phr, enthalten. Erfindungsmäßige Mischungen M_{LKW} enthalten als Kautschukkomponenten vorzugsweise ausschließlich einen Naturkautschuk und/oder synthetisches Polyisopren.

Weichmacher und Klebharze sind den Mischungen M_{PKW} und den Mischungen M_{LKW} in Mengen von 20 phr bis 40 phr, insbesondere in Mengen von 25 phr bis 35 phr, zugesetzt.

Des Weiteren verfügen die Mischungen M_{PKW} und M_{LKW} über ein Resorcin-Formaldehyd-System. Dieses System besteht aus Resorcin sowie einem Formaldehydspender und dient zur Verbesserung der Gummi-Metall-Haftung. Bei dem im Rahmen der Vulkanisation entstehenden Resorcin-Formaldehyd-Harz handelt es sich um ein Direkthaftmittel, das als Kondensationsprodukt von Resorcin mit Formaldehydspendern, wie beispielsweise HMMM (Hexamethoxymethylated melamine formaldehyde), erhalten wird. Die Bestandteile des Resorcin-Formaldehyd-Systems sind in Summe in Mengen von 3 phr bis 7 phr enthalten.

Zur Vernetzung des Kautschuks werden den Mischungen M_{PKW} und M_{LKW} vorzugsweise elementarer Schwefel oder Schwefelspender, wobei bestimmte Schwefelspender zugleich als Vulkanisationsbeschleuniger wirken können, sowie ein oder mehrere Beschleuniger hinzugefügt. Die Beschleuniger sind vorzugsweise aus der Gruppe der Sulfenamidbeschleuniger, Thiazolbeschleuniger, Thiurambeschleuniger, Mercaptobeschleuniger, Dicarbamatbeschleuniger, Aminbeschleuniger, Dithiophosphate, oder der Thioharnstoffe. Aus der Gruppe der Sulfenamidbeschleuniger ist insbesondere CBS (N-Cyclohexylbenzothiazol-2-Sulfenamid) und DCBS (N, N'-Dicyclohexylbenzothiazol-2-Sulfenamide) bevorzugt. Mischungen M_{PKW} enthalten in Summe Schwefel und Beschleuniger in Mengen von 2 phr bis 10 phr, insbesondere in Mengen von 3 phr bis 7 phr. Bei Mischungen M_{LKW} sind in Summe Mengen von 4 phr bis 12 phr, bevorzugter Weise von 5 phr bis 9 phr, an Schwefel und Beschleuniger zugesetzt.

Zu den weiteren in den Mischungen M_{PKW} und M_{LKW} befindlichen Zusatzstoffen gehören Alterungsschutzmittel, Prozesshilfsmittel, Zinkoxid, Stearinsäure sowie organische Kobaltsalze. Kobaltsalze werden häufig in Kombination mit einem Resorcin-Formaldehyd-Kieselsäure-System oder einem Resorcin-Formaldehyd-System zur Verbesserung der Gummi-Metall-Haftung in Kautschukmischungen für Gummierungsschichten eingesetzt. Bei den den Kobaltsalzen zugrundeliegenden organischen Säuren handelt es sich beispielsweise um Neodecansäure, Stearinsäure, Naphthensäure, Harzsäure, Tallölsäure, Palmitinsäure, Ölsäure, Linolsäure, Linolensäure oder borhaltige organische Säuren, wie Borat-Neodecansäure. Die verschiedenen Kobaltsalze können einzeln oder auch in Kombination eingesetzt werden.

### Bezugsziffernliste

- 1: Laufstreifen
- 2: Gürtelverband
- 3, 4: Gürtellagen
- 5: Karkasseinlage
- 6: Seitenwand
- 7: Wulstkern
- 8: Kernprofil
- 9: Gürtelkantenpolster
- 10: äußere Lage
- 11: innere Lage
- 12: textile Festigkeitsträger
- 13: Innenschicht
- 14: Squeegeeinlage
- 15: radial äußere Gummierungsschicht
- 16: radial innere Gummierungsschicht

## Patentansprüche

1. Fahrzeugluftreifen in Radialbauart mit einem Laufstreifen (1), einem Gürtelverband (2), Seitenwänden (6), Wulstbereichen und einer von Wulstbereich zu Wulstbereich verlaufenden, zumindest eine Lage (10, 11) aufweisenden, Karkasseinlage (5), wobei jede Lage (10, 11) zwischen und in Gummierungsschichten (15, 16), eingebettete zumindest im Wesentlichen in radialer Richtung verlaufende textile Festigkeitsträger (12) aufweist, wobei die *innere Gummierungsschicht (16)* aus einer Naturkautschuk und/oder synthetisches Polyisopren enthaltenden Kautschukmischung hergestellt ist,
**dadurch gekennzeichnet,**
**dass** die Karkasseinlage (5) den Reifeninnenraum unmittelbar begrenzt,
wobei bei einer Karkasseinlage (5) mit einer einzigen Lage die unmittelbar an den Reifeninnenraum anschließende Gummierungsschicht *(16)* dieser Lage aus einer Blähgraphit enthaltenden Kautschukmischung hergestellt ist und
wobei bei einer Karkasseinlage (5) mit mehr als einer Lage (10, 11) die unmittelbar an den Reifeninnenraum anschließende Gummierungsschicht (16) der innersten Lage (11) aus einer Blähgraphit enthaltenden Kautschukmischung hergestellt ist, und wobei die den Reifeninnenraum unmittelbar begrenzende Lage (11) der Karkasseinlage (5) eine Dicke von 0,5 mm bis 2,0 mm aufweist.

2. Fahrzeugluftreifen nach Anspruch 1, **dadurch gekennzeichnet, dass** die Kautschukmischung der Gummierungsschicht (16) Blähgraphit in einer Menge von 1 phr bis 30 phr, insbesondere in einer Menge von 3 phr bis 25 phr, enthält.

3. Fahrzeugluftreifen nach Anspruch 1 oder 2, **dadurch gekennzeichnet, dass** die Kautschukmischung der Gummierungsschicht (16) Blähgraphit in einer Menge von 5 phr bis 20 phr enthält.

4. Fahrzeugluftreifen nach einem der Ansprüche 1 bis 3, welcher ein Nutzfahrzeugreifen ist, **dadurch gekennzeichnet, dass** die Kautschukmischung der Gummierungsschicht (16) Kieselsäure in einer Menge von 5 phr bis 20 phr, insbesondere in einer Menge bis zu 10 phr, enthält.

5. Fahrzeugluftreifen nach einem der Ansprüche 1 bis 4, welcher ein Nutzfahrzeugluftreifen ist, **dadurch gekennzeichnet, dass** die Kautschukmischung der Gummierungsschicht (16) bis zu 100 phr Naturkautschuk und/oder synthetisches Polyisopren enthält.

6. Fahrzeugluftreifen nach einem der Ansprüche 1 bis 3, welcher ein PKW-Reifen ist, **dadurch gekennzeichnet, dass** die Kautschukmischung der Gummierungsschicht (16) 40 phr bis 60 phr, insbesondere 45 phr bis 55 phr, Naturkautschuk und/oder synthetisches Polyisopren enthält.

7. Fahrzeugluftreifen nach Anspruch 6, **dadurch gekennzeichnet, dass** die Kautschukmischung der Gummierungsschicht (16) Butadienkautschuk und/oder Styrolbutadienkautschuk enthält.

8. Fahrzeugluftreifen nach einem der Ansprüche 1 bis 7, **dadurch gekennzeichnet, dass** die Kautschukmischung der Gummierungsschicht (16) Weichmacher und Klebharze in Mengen von 20 phr bis 40 phr, insbesondere in Mengen von 25 phr bis 35 phr, enthält.

9. Fahrzeugluftreifen nach einem der Ansprüche 1 bis 8, **dadurch gekennzeichnet, dass** die Kautschukmischung der Gummierungsschicht (16) Resorcin sowie einem Formaldehydspender in Summe in Mengen von 3 phr bis 7 phr enthält.

10. Fahrzeugluftreifen nach einem der Ansprüche 1 bis 9, **dadurch gekennzeichnet, dass** die den Reifeninnenraum unmittelbar begrenzende Lage (10, 11) der Karkasseinlage (5) eine Dicke von 0,7 mm bis 1,0 mm aufweist.

11. Fahrzeugluftreifen nach einem der Ansprüche 1 bis 10, **dadurch gekennzeichnet, dass** die Kautschukmischungen beider Gummierungsschichten (15, 16) der Karkasseinlage (5) identisch sind.

## Claims

1. Pneumatic vehicle tyre of radial construction having a tread (1), a belt bandage (2), sidewalls (6), bead regions and a carcass insert (5) running from bead region to bead region and comprising at least one ply (10, 11), wherein each ply (10, 11) comprises textile strength members (12) which are embedded between and in rubberization layers (15, 16) and run at least substantially in the radial direction, wherein the inner rubberization layer (16) is produced from a rubber mixture containing natural rubber and/or synthetic polyisoprene,
**characterized in that**
the carcass insert (5) directly delimits the tyre interior, wherein in the case of a carcass insert (5) having a single ply the rubberization layer (16) of this ply immediately adjacent to the tyre interior is produced from a rubber mixture containing expanded graphite and wherein in the case of a carcass insert (5) having more than one ply (10, 11) the rubberization layer (16) of the innermost ply (11) immediately adjacent to the tyre interior is produced from a rubber mixture containing expanded graphite and wherein the ply (11) of the carcass insert (5) directly delimiting the tyre interior has a thickness of 0.5 mm to 2.0 mm.

2. Pneumatic vehicle tyre according to Claim 1, **characterized in that** the rubber mixture of the rubberization layer (16) contains expanded graphite in an amount of 1 phr to 30 phr, in particular in an amount of 3 phr to 25 phr.

3. Pneumatic vehicle tyre according to Claim 1 or 2, **characterized in that** the rubber mixture of the rubberization layer (16) contains expanded graphite in an amount of 5 to 20 phr.

4. Pneumatic vehicle tyre according any of Claims 1 to 3 which is a pneumatic commercial vehicle tyre, **characterized in that** the rubber mixture of the rubberization layer (16) contains silica in an amount of 5 phr to 20 phr, in particular in an amount of up to 10 phr.

5. Pneumatic vehicle tyre according to any of Claims 1 to 4 which is a pneumatic commercial vehicle tyre, **characterized in that** the rubber mixture of the rubberization layer (16) contains up to 100 phr of natural rubber and/or synthetic polyisoprene.

6. Pneumatic vehicle tyre according to any of Claims 1 to 3 which is a passenger car tyre, **characterized in that** the rubber mixture of the rubberization layer (16) contains 40 phr to 60 phr, in particular 45 phr to 55 phr, of natural rubber and/or synthetic polyisoprene.

7. Pneumatic vehicle tyre according to Claim 6, **characterized in that** the rubber mixture of the rubberization layer (16) contains butadiene rubber and/or styrene butadiene rubber.

8. Pneumatic vehicle tyre according to any of Claims 1 to 7, **characterized in that** the rubber mixture of the rubberization layer (16) contains plasticizers and tackifying resins in amounts of 20 phr to 40 phr, in particular in amounts of 25 phr to 35 phr.

9. Pneumatic vehicle tyre according to any of Claims 1 to 8, **characterized in that** the rubber mixture of the rubberization layer (16) contains resorcinol and a formaldehyde donor in total amounts of 3 phr to 7 phr.

10. Pneumatic vehicle tyre according to any of Claims 1 to 9, **characterized in that** the ply (10, 11) of the carcass insert (5) directly delimiting the tyre interior has a thickness of 0.7 mm to 1.0 mm.

11. Pneumatic vehicle tyre according to any of Claims 1 to 10, **characterized in that** the rubber mixtures of both rubberization layers (15, 16) of the carcass insert (5) are identical.

## Revendications

1. Bandage pneumatique de véhicule en construction radiale, comprenant une bande de roulement (1), une membrure de ceinture (2), des parois latérales (6), des zones de talon et un corset de carcasse (5) qui s'étend de zone de talon en zone de talon et possède au moins une couche (10, 11), chaque couche (10, 11) possédant un renfort (12) textile enrobé dans et entre des strates d'engommage (15, 16) qui s'étend au moins sensiblement dans la direction radiale, la strate d'engommage interne (16) étant fabriquée à partir d'un caoutchouc naturel et/ou d'un mélange de caoutchouc contenant un polyisoprène synthétique,
**caractérisé en ce**
**que** le corset de carcasse (5) délimite directement l'espace intérieur de bandage,
dans le cas d'un corset de carcasse (5) à une seule couche, la strate d'engommage (16) de cette couche qui se rattache directement à l'espace intérieur de bandage étant fabriquée à partir d'un mélange de caoutchouc contenant du graphite expansé et
dans le cas d'un corset de carcasse (5) comprenant plus d'une couche (10, 11), la strate d'engommage (16) de la couche (11) la plus à l'intérieur qui se rattache directement à l'espace intérieur de bandage étant fabriquée à partir d'un mélange de caoutchouc contenant du graphite expansé,
et la couche (11) du corset de carcasse (5) qui délimite directement l'espace intérieur de bandage présentant une épaisseur de 0,5 mm à 2,0 mm.

2. Bandage pneumatique de véhicule selon la revendication 1, **caractérisé en ce que** le mélange de caoutchouc de la strate d'engommage (16) contient du graphite expansé dans une quantité de 1 pcc à 30 pcc, notamment dans une quantité de 3 pcc à 25 pcc.

3. Bandage pneumatique de véhicule selon la revendication 1 ou 2, **caractérisé en ce que** le mélange de caoutchouc de la strate d'engommage (16) contient du graphite expansé dans une quantité de 5 pcc à 20 pcc.

4. Bandage pneumatique de véhicule selon l'une des revendications 1 à 3, lequel est un bandage de véhicule utilitaire, **caractérisé en ce que** le mélange de caoutchouc de la strate d'engommage (16) contient de la silice dans une quantité de 5 pcc à 20 pcc, notamment dans une quantité maximale de 10 pcc.

5. Bandage pneumatique de véhicule selon l'une des revendications 1 à 4, lequel est un bandage de véhicule utilitaire, **caractérisé en ce que** le mélange de caoutchouc de la strate d'engommage (16) contient jusqu'à 100 pcc de caoutchouc naturel et/ou de polyisoprène synthétique.

6. Bandage pneumatique de véhicule selon l'une des revendications 1 à 3, lequel est un bandage de véhicule de tourisme, **caractérisé en ce que** le mélange de caoutchouc de la strate d'engommage (16) contient de 40 pcc à 60 pcc, notamment de 45 pcc à 55 pcc de caoutchouc naturel et/ou de polyisoprène synthétique.

7. Bandage pneumatique de véhicule selon la revendication 6, **caractérisé en ce que** le mélange de caoutchouc de la strate d'engommage (16) contient du caoutchouc butadiène et/ou du caoutchouc styrène-butadiène.

8. Bandage pneumatique de véhicule selon l'une des revendications 1 à 7, **caractérisé en ce que** le mélange de caoutchouc de la strate d'engommage (16) contient un plastifiant et des résines adhésives dans des quantités de 20 pcc à 40 pcc, notamment dans des quantités de 25 pcc à 35 pcc.

9. Bandage pneumatique de véhicule selon l'une des revendications 1 à 8, **caractérisé en ce que** le mélange de caoutchouc de la strate d'engommage (16) contient de la résorcine ainsi qu'un donneur de formaldéhyde au total dans des quantités de 3 pcc à 7 pcc.

10. Bandage pneumatique de véhicule selon l'une des revendications 1 à 9, **caractérisé en ce que** la couche (10, 11) du corset de carcasse (5) qui délimite directement l'espace intérieur de bandage présente une épaisseur de 0,7 mm à 1,0 mm.

11. Bandage pneumatique de véhicule selon l'une des revendications 1 à 10, **caractérisé en ce que** les mélanges de caoutchouc des deux strates d'engommage (15, 16) du corset de carcasse (5) sont identiques.
